# EUROPÄISCHE PATENTANMELDUNG

(11) **EP 4 628 959 A1**
(43) Veröffentlichungstag der Anmeldung: **08.10.2025**
(21) Anmeldenummer: 24465517.1
(22) Anmeldetag: 03.04.2024
(51) Int. Cl.: G02B 7/02, G02B 27/00, G03B 17/55, H04M 1/02, H04N 23/51

(54) **KAMERA FÜR EIN FAHRZEUG, FAHRERASSISTENZSYSTEM UND FAHRZEUG**

(71) Anmelder: AUMOVIO Autonomous Mobility Germany GmbH, 85057 Ingolstadt (DE)
(72) Erfinder: Grünwald, Martin, 88131 Lindau (DE); Bogdan, Alina, 300704 Timisoara (RO)
(74) Vertreter: Aumovio Corporation

(57) **Zusammenfassung**

Die Erfindung betrifft eine Kamera für ein Fahrzeug (1) umfassend wenigstens ein elektrisch leitfähiges Gehäuseelement (11), wenigstens eine Leiterplatte (12) und wenigstens ein elektrisches Heizelement (13), wobei das elektrische Heizelement (13) einen ersten Kontakt (14) und einen dem ersten Kontakt gegenüberliegend angeordneten zweiten Kontakt (15) zur Zufuhr eines Heizstroms (IH) in das Heizelement (13) aufweist, wobei das Heizelement (13) zwischen der Leiterplatte (12) und einem Abschnitt (16) des Gehäuseelements (11) angeordnet ist und wobei der erste Kontakt (14) mit der Leiterplatte (12) und der zweite Kontakt (15) mit dem Gehäuseelement (11) elektrisch verbunden ist.

## Beschreibung

Die Erfindung betrifft eine Kamera für ein Fahrzeug umfassend wenigstens ein elektrisch leitfähiges Gehäuseelement, wenigstens eine Leiterplatte und wenigstens ein elektrisches Heizelement, wobei das elektrische Heizelement einen ersten Kontakt und einen dem ersten Kontakt gegenüberliegend angeordneten zweiten Kontakt zur Zufuhr eines Heizstroms in das Heizelement aufweist. Weiterhin betrifft die Erfindung ein Fahrerassistenzsystem und ein Fahrzeug.

In modernen Fahrzeugen werden Kameras zur Bereitstellung von verschiedenen Fahrerassistenzfunktionen und/oder von autonomen oder teilautonomen Fahrfunktionen eingesetzt. Beispielsweise kann eine am Heck des Fahrzeugs angeordnete Kamera beim Rückwärtsfahren Bilder des hinter dem Fahrzeug liegenden Teils des Fahrzeugumfelds liefern, welche einem Fahrer das Rangieren oder das Parken mit dem Fahrzeug erleichtern können. Die von der Kamera erzeugten Bilder können dazu zum Beispiel auf einer Anzeigeeinrichtung am Armaturenbrett des Fahrzeugs dargestellt werden. Weiterhin können am Fahrzeug auch eine oder mehrere Kameras angeordnet sein, welche den Bereich vor dem Fahrzeug und/oder neben dem Fahrzeug erfassen. Auch die Darstellung dieser Kamerabilder oder aus diesen Kamerabildern abgeleiteten Ansichten und/oder Umgebungsinformationen können den Fahrbetrieb bzw. das Manövrieren mit dem Fahrzeug erleichtern.

Die am Fahrzeug angeordneten Kameras sind in der Regel den Witterungseinflüssen der Fahrzeugumgebung ausgesetzt. Insbesondere bei Feuchtigkeit und/oder bei niedrigen Temperaturen kann es wünschenswert sein, die Kamera zu erwärmen. Dadurch können zum Beispiel auf eine Optik der Kamera wirkende Temperatureinflüssen kompensiert und/oder störende Beläge wie Frost, Kondenswasser oder Ähnliches entfernt werden. Aus dem Stand der Technik sind verschiedene Ansätze bekannt, um eine Temperaturregulierung in einer Kamera zu realisieren.

In Druckschrift DE 10 2018 214 108 A1 wird ein Temperaturregulierungselement für eine Sensorvorrichtung beschrieben. Das Temperaturregulierungselement umfasst ein dreidimensionales Kunststoffbauteil, in dem eine metallisierte Struktur integriert ist. Durch Einprägen eines Stromes in die metallisierte Struktur kann diese erwärmt werden, wodurch die Sensorvorrichtung geheizt wird.

Je nach Art und Ausprägung des oder der verwendeten Heizelemente unterscheidet sich der für die Anordnung des Heizelements sowie für die Anordnung einer erforderlichen elektrischen Kontaktierung benötigte Bauraum. Wünschenswert ist dabei, dass die Integration des Heizelements in ein Gehäuse so wenig Platz wie möglich benötigt.

Der Erfindung liegt die Aufgabe zugrunde, eine Kamera mit wenigstens einem elektrischen Heizelement anzugeben, welches möglichst platzsparend in der Kamera integriert ist.

Zur Lösung dieser Aufgabe ist es bei einer Kamera der eingangs genannten Art erfindungsgemäß vorgesehen, dass das Heizelement zwischen der Leiterplatte und einem Abschnitt des Gehäuseelements angeordnet ist, wobei der erste Kontakt mit der Leiterplatte und der zweite Kontakt mit dem Gehäuseelement elektrisch verbunden ist.

Das elektrisch leitfähige Gehäuseelement der Kamera kann allein oder mit anderen Gehäuseelementen ein Gehäuse der Kamera bilden. Das Gehäuseelement kann dabei wenigstens einen Abschnitt einer äußeren Umhüllung des Gehäuses und/oder ein inneres Strukturelement eines Gehäuses sein oder bilden. Die Leiterplatte ist, insbesondere vollständig, innerhalb des Gehäuses angeordnet, sodass sie von dem Gehäuse umschlossen und vor äußeren Einflüssen geschützt ist. Auch das wenigstens eine Heizelement ist insbesondere vollständig im Inneren eines das wenigstens eine elektrisch leitfähige Gehäuseelement umfassenden Kameragehäuses angeordnet.

Das elektrisch leitfähige Gehäuseelement kann aus einem elektrisch leitfähigen Metall, beispielsweise aus Aluminium, bestehen. Durch die elektrische Leitfähigkeit des Gehäuseelements kann insbesondere ein Massekontakt bzw. ein Massepotential für die Leiterplatte, bzw. wenigstens eine auf der Leiterplatte integrierte elektrische Schaltung, bereitgestellt werden.

Das elektrische Heizelement ist insbesondere ein resistives Heizelement, das sich erwärmt, wenn es von einem elektrischen Strom durchflossen wird. Um den Strom in das Heizelement einzuspeisen, umfasst das Heizelement zwei elektrische Kontakte, welche an gegenüberliegenden Seiten des Heizelements angeordnet sind. Das Heizelement ist weiterhin zwischen der Leiterplatte und dem elektrisch leitfähigen Gehäuseelement angeordnet, wobei der insbesondere zur Leiterplatte weisende erste Kontakt elektrisch mit der Leiterplatte verbunden ist. Der gegenüberliegende Kontakt, welcher insbesondere entsprechend zu dem Gehäuseelement weist, ist elektrisch mit dem Gehäuseelement verbunden.

Auf diese Weise kann ein Stromkreis gebildet werden, welcher beispielsweise ausgehend von einem mit dem ersten Kontakt elektrisch verbunden Potentialanschluss (Signal-Anschluss) über das Heizelement zu dem insbesondere mit einem Massepotential (Ground-Anschluss) verbundenen Gehäuseelement verläuft. Mit anderen Worten kann somit über die Leiterplatte ein elektrischer Strom in das Heizelement eingeprägt werden, welcher eine Erwärmung des Heizelements und folglich auch der gesamten Kamera bewirkt.

Die Kamera kann eines oder mehrere Heizelemente umfassen. Wenn mehrere Heizelemente vorhanden sind, können die ersten Kontakte dieser Heizelemente insbesondere mit derselben Leiterplatte verbunden sein. Alternativ kann vorgesehen sein, dass die Kamera mehrere Leiterplatten, welche elektrisch miteinander verbunden sein können, umfasst. Die zweiten Kontakte mehrerer Heizelemente können mit demselben oder mit unterschiedlichen elektrisch leitfähigen Gehäusebauteilen verbunden sein, wobei die unterschiedlichen Gehäusebauteile sich bevorzugt auf demselben elektrischen Potential, insbesondere einem Massepotential, befinden.

Die Kontakte sind insbesondere als Kontaktflächen aus einem leitfähigen Material, beispielsweise aus einem Metall, ausgeführt. Die Kontaktflächen können dabei insbesondere parallel zueinander ausgerichtet sein. Insbesondere ist dabei die Flächennormale der Kontaktflächen parallel zu einer optischen Achse der Kamera, sodass der erste Kontakt und der zweite Kontakt entlang der optischen Achse versetzt angeordnet sind.

Die Verbindung des zweiten Kontakts mit dem elektrisch leitfähigen Gehäuseelement hat den Vorteil, dass der Stromkreis zum Einspeisen des Heizstroms in das Heizelement über das Gehäuseelement geschlossen werden kann, sodass keine weitere elektrische Verbindung zwischen dem zweiten Kontakt und der Leiterplatte notwendig ist. Auf diese Weise kann auf elektrische Verbindungsmittel wie Drähte, Stecker und dergleichen verzichtet werden, was einen kompakteren Aufbau der Kamera bzw. eine platzsparende Integration des wenigstens einen Heizelements ermöglicht.

Da kein Verbindungsmittel zwischen der Leiterplatte und dem zweiten Kontakt des Heizelements benötigt wird, kann weiterhin wenigstens eine Kontaktfläche auf der Leiterplatte eingespart werden, wodurch vorteilhaft die Verwendung einer kleineren Leiterplatte und/oder eine kostengünstigere Fertigung der Leiterplatte ermöglicht werden kann.

Erfindungsgemäß kann vorgesehen sein, dass das Heizelement ein Material mit einem positiven Temperatur-Koeffizienten ist oder umfasst. Mit anderen Worten kann das Heizelement also ein Thermistor bzw. ein PTC-Widerstand (PTC = positive temperature coefficient) sein. Der Vorteil eines Materials mit einem positiven Temperatur-Koeffizienten ist, dass der elektrische Widerstand des Materials bei zunehmender Erwärmung ebenfalls zunimmt, wodurch eine selbstregulierende Wirkung des Heizelements eintritt.

In einer bevorzugten Ausgestaltung der Erfindung kann vorgesehen sein, dass das Heizelement scheibenförmig ist, wobei der erste Kontakt und der zweite Kontakt jeweils auf einer der gegenüberliegenden Stirnflächen des Heizelements angeordnet sind. Das Heizelement kann eine Kreisscheibe sein oder eckig, z.B. quadratisch, rechteckig etc., ausgeführt sein. Die Dicke, d.h. der Abstand der gegenüberliegenden Stirnflächen des scheibenförmigen Heizelements ist deutlich kleiner als der Durchmesser der Stirnflächen, bspw. 20% des Durchmessers oder weniger. Der erste Kontakt und/oder der zweite Kontakt können dabei jeweils einen Teil oder die gesamte Stirnfläche bilden. Das Verwenden eines scheibenförmigen Heizelements hat dabei den Vorteil, dass es platzsparend zwischen der Leiterplatte und dem Gehäuseteil angeordnet werden kann.

Erfindungsgemäß kann vorgesehen sein, dass zwischen der Leiterplatte und dem ersten Kontakt des Heizelements ein elektrisch leitfähiges Federelement angeordnet ist, welches das Heizelement gegen den Abschnitt des Gehäuseelements drückt. Durch das elektrisch leitfähige Federelement kann eine elektrische Verbindung zwischen der Leiterplatte und dem ersten Kontakt des Heizelements hergestellt werden. Weiterhin wird das Heizelement durch das Federelement mit einer Kraft beaufschlagt, welche den zweiten Kontakt in Richtung des Gehäuseteils drückt. Dadurch kann ein dauerhafter und mechanisch stabiler elektrischer Kontakt auch zwischen dem zweiten Kontakt und dem Gehäuseteil erreicht werden.

In einer bevorzugten Ausgestaltung der Erfindung kann vorgesehen sein, dass das Heizelement unmittelbar an dem Abschnitt des Gehäuseelements anliegt und/oder dass zwischen dem Heizelement und dem Abschnitt des Gehäuseelements zumindest bereichsweise eine elektrisch leitfähige Paste aufgebracht ist. Das Heizelement kann insbesondere mit einem flächig ausgeführten zweiten Kontakt an einem ebenfalls flächigen Abschnitt des Gehäuseelements anliegen. Auf diese Weise kann ein guter elektrischer Kontakt zwischen dem Heizelement und dem Gehäuseabschnitt erreicht werden. Auch eine Wärmeabfuhr vom Heizelement in das Gehäuseelement ist dabei effizient möglich. Weiterhin wird durch das unmittelbare Anliegen des Heizelements am Gehäuseelement kein zusätzlicher Bauraum für Verbindungsmittel oder Ähnliches benötigt.

Alternativ oder zusätzlich zu einem unmittelbaren Anliegen des zweiten Kontakts am Gehäuseabschnitt kann vorgesehen sein, dass, insbesondere ausschließlich, eine elektrisch leitfähige Paste zumindest bereichsweise zwischen dem zweiten Kontakt und dem Gehäuseelement aufgebracht ist. Mithilfe der Paste können ein verbesserter elektrischer Kontakt und ein niedriger thermischer Übergangswiderstand, insbesondere bei Oberflächenunebenheiten, erreicht werden.

Erfindungsgemäß kann vorgesehen sein, dass das Heizelement zumindest teilweise in einer Aussparung des Gehäuseelements, welche das Heizelement insbesondere in zwei Raumrichtungen fixiert, angeordnet ist. Der Abschnitt des Gehäuses, an dem das Heizelement anliegt, kann dabei insbesondere der Boden der Aussparung sein. Die Form der Aussparung kann insbesondere der Form des Heizelements entsprechen, sodass das Heizelement formschlüssig in der Aussparung fixiert werden kann. Das Heizelement kann insbesondere vollständig ist der Aussparung aufgenommen sein, sodass es beispielsweise bei Einsatz eines auf den ersten Kontakt drückenden Federelements in alle Raumrichtungen fixiert wird.

Zumindest ein Kontaktabschnitt der Leiterplatte kann erfindungsgemäß an dem Gehäuseelement anliegen und elektrisch leitfähig mit dem Gehäuseelement verbunden sein. Insbesondere kann ein dem Massepotential zugeordneter Kontakt der Leiterplatte an dem Gehäuseelement anliegen. Eine elektrische Verbindung zwischen der Leiterplatte und dem Gehäuseelement kann dabei z.B. durch ein Andrücken der Leiterplatte an das Gehäuseelement, beispielsweise durch eine Verschraubung oder ähnliches, verbessert werden. Die elektrische Verbindung kann auch stoffschlüssig erfolgen, z.B. durch Verlöten, und/oder durch ein Verbindungsmittel wie eine elektrisch leitfähige Paste o.Ä. verbessert werden.

Zusätzlich oder alternativ dazu kann erfindungsgemäß die Leiterplatte formschlüssig an dem Gehäuseelement befestigt sein. Dies kann zum Beispiel durch korrespondierende Geometrien der Leiterplatte und des Gehäuseelements erreicht werden. Es ist ergänzend oder alternativ dazu auch möglich, dass das Gehäuseelement einen oder mehrere, beispielsweise zapfenförmige, Befestigungsabschnitte aufweist, welche in korrespondierende Öffnungen der Leiterplatte eingreifen und diese somit in wenigstens zwei Raumrichtungen fixieren.

Erfindungsgemäß kann vorgesehen sein, dass die Leiterplatte wenigstens einen Bildsensor zur Aufnahme von Kamerabildern aufweist. Dem Bildsensor kann dabei eine Linsenoptik der Kamera zugeordnet sein, wobei die Linsenoptik insbesondere an dem Gehäuseelement befestigt sein kann. Zusätzlich zu dem Bildsensor kann die Leiterplatte auf weitere elektronische Komponenten, beispielsweise zur Verarbeitung und/oder zur Übertragung von mit dem Bildsensor aufgenommenen Kamerabildern, aufweisen.

Ein erfindungsgemäßes Fahrerassistenzsystem umfasst ein Steuergerät und wenigstens eine erfindungsgemäße Kamera, wobei das Steuergerät dazu eingerichtet ist, eine Fahrerassistenzfunktion basierend auf mit der wenigstens einen Kamera erzeugten Bilddaten bereitzustellen. Bei dem Fahrerassistenzsystem kann es sich zum Beispiel um eine Rückfahrhilfe, einen elektrischen Seitenspiegel, ein Surroundview-System, eine teilautonome oder vollständig autonome Fahrfunktion, einen Parkassistenten oder Ähnliches handeln.

Für ein erfindungsgemäßes Fahrzeug ist vorgesehen, dass es wenigstens eine erfindungsgemäße Kamera oder ein erfindungsgemäßes Fahrerassistenzsystem umfasst.

Für das erfindungsgemäße Fahrerassistenzsystem sowie für das erfindungsgemäße Fahrzeug gelten die vorangehend für die erfindungsgemäße Kamera beschriebenen Vorteile und Ausgestaltungen entsprechend. Auch die in Bezug zu dem erfindungsgemäßen Fahrerassistenzsystem sowie dem erfindungsgemäßen Fahrzeug beschriebenen Vorteile und Ausgestaltungen sind auf die jeweils anderen Erfindungsgegenstände analog übertragbar.

Weitere Vorteile und Ausgestaltungen der Erfindung ergeben sich aus den im Folgenden beschriebenen Ausführungsbeispielen sowie anhand der Zeichnungen. Diese sind schematische Darstellungen und zeigen:
- Fig. 1: ein Ausführungsbeispiel eines erfindungsgemäßen Fahrzeugs, umfassend ein Ausführungsbeispiel eines erfindungsgemäßen Fahrerassistenzsystems,
- Fig. 2: ein Ausführungsbeispiel einer erfindungsgemäßen Kamera und
- Fig. 3: eine Explosionsdarstellung des Ausführungsbeispiels der erfindungsgemäßen Kamera.

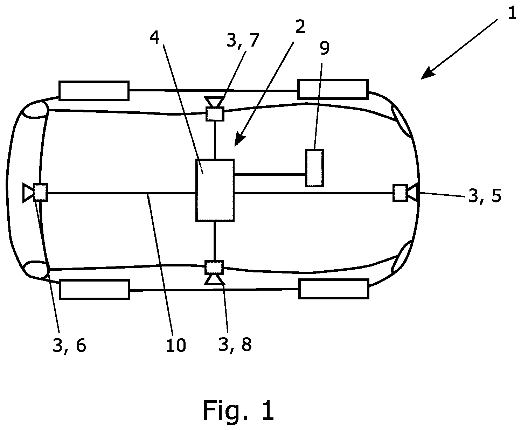

In Fig. 1 ist ein Ausführungsbeispiel eines Fahrzeugs 1 gezeigt. Bei dem Fahrzeug 1 kann es sich zum Beispiel um ein Kraftfahrzeug, insbesondere einen Personenkraftwagen, einen Lastkraftwagen oder eine andere Art von Nutzfahrzeug, handeln. Es ist auch möglich, dass das Fahrzeug 1 ein unmotorisiertes Fahrzeug wie ein Anhänger ist oder dass es sich um ein Gespann aus einem Zugfahrzeug und einem Anhänger handelt. Das Fahrzeug 1 kann auch ein schienengebundenes Fahrzeug, wie eine Straßenbahn oder dergleichen, oder ein Roboter sein.

Das Fahrzeug 1 umfasst ein Ausführungsbeispiel eines Fahrerassistenzsystems 2, welches eine oder mehrere Kameras 3 sowie ein Steuergerät 4 umfasst. Bei dem Fahrerassistenzsystem 2 kann es sich beispielsweise um eine Rückfahrhilfe, einen elektrischen Seitenspiegel, ein Surroundview-System, eine teilautonome oder vollständig autonome Fahrfunktion, einen Parkassistenten oder Ähnliches handeln.

Im vorliegenden Ausführungsbeispiel umfasst das Fahrzeug 1 vier Umfeldkameras 3, welche eine als Surroundview-System ausgeführte Kameraanordnung bilden. Eine erste Kamera 5 ist dabei als eine Frontkamera des Fahrzeugs 1, eine zweite Kamera 6 als eine Rückfahrkamera des Fahrzeugs 1, sowie eine dritte Kamera 7 und eine vierte Kamera 8 jeweils als eine Seitenkamera des Fahrzeugs 1 angeordnet. Mittels der Kameras 3 können jeweils Bilddaten aus einem Teilbereich einer Umgebung des Fahrzeugs 1 erzeugt werden. Die Kameras 3 können jeweils zum Beispiel als eine Weitwinkelkamera, beispielsweise als Kameras mit jeweils einem Fischaugenobjektiv, ausgeführt sein und weisen bevorzugt einen Erfassungsbereich in der Horizontalen von 180° oder mehr auf. Das Steuergerät 4 der Bildaufnahmeeinrichtung 2 kann zum Beispiel als ein Mikrocontroller, als ein Prozessor oder als eine andere Art von Recheneinrichtung ausgebildet sein.

Das Fahrzeug 1 umfasst weiterhin eine Anzeigeeinrichtung 9, über die grafische Informationen für einen Fahrer bzw. einen Benutzer des Fahrzeugs 1 dargestellt werden können. Bei der Anzeigeeinrichtung 9 kann es sich zum Beispiel um einen oder mehrere in einem Innenraum des Fahrzeugs 1 angeordnete Bildschirme bzw. Displays handeln.

Die Kameras 3 sind mit dem Steuergerät 4 über eine Kommunikationsverbindung 10 verbunden. Die Kommunikationsverbindung 10 kann zum Beispiel eine Mehrzahl von Punkt-zu-Punkt-Verbindungen umfassen oder eine Bus-Verbindung wie ein CAN-Bus oder dergleichen sein. Über die Kommunikationsverbindung 10 werden, insbesondere kontinuierlich als ein Videostream, Kamerabilder bzw. Bilddaten von den Kameras 3 an das Steuergerät 4 übermittelt. Zumindest ein Teil der Kamerabilder und/oder eine aus den Bilddaten wenigstens einer der Kameras 3 erzeugte Umgebungsansicht können einem Fahrer des Fahrzeugs 1 dann auf der Anzeigeeinrichtung 9 angezeigt werden.

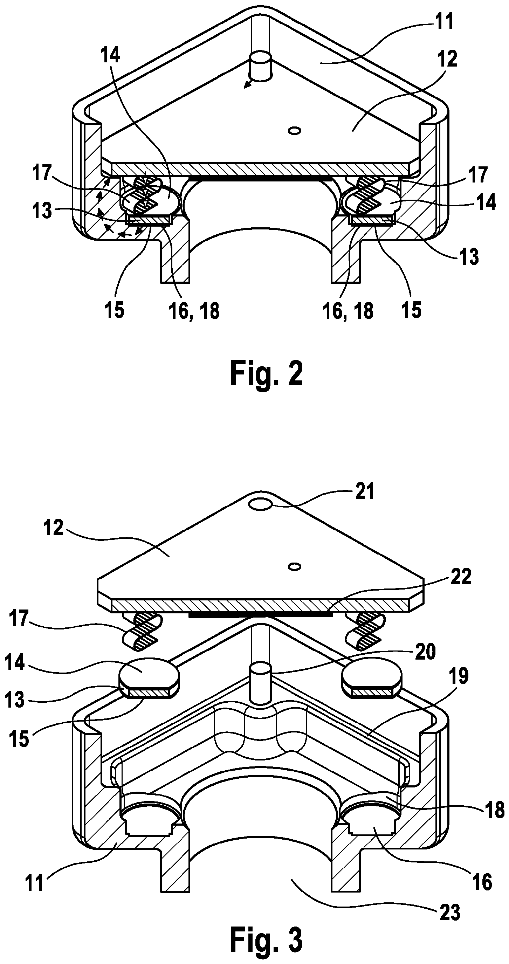

In Fig. 2 ist ein Ausführungsbeispiel einer Kamera 3 dargestellt. Bei dieser Kamera 3 kann es sich zum Beispiel um eine der Kameras 3, 5 - 8 des Fahrzeugs 1 handeln.

Die Kamera 3 umfasst wenigstens ein elektrisch leitfähiges Gehäuseelement 11, wenigstens eine Leiterplatte 12 und zwei elektrische Heizelemente 13. Es ist möglich, dass die Kamera 3 auch mehr als zwei Heizelemente 13 oder auch nur ein Heizelement 13 aufweist.

Die elektrischen Heizelemente 13 umfassen jeweils einen ersten Kontakt 14 und einen dem ersten Kontakt 14 gegenüberliegend angeordneten zweiten Kontakt 15 zur Zufuhr eines Heizstroms I_{H} in das jeweilige Heizelement 13. Die Heizelemente 13 sind jeweils kreisscheibenförmig, wobei ihre Kreisform aufgrund der Schnittansicht in Fig. 2 nicht vollständig dargestellt ist. Der erste Kontakt 14 und der zweite Kontakt 15 sind jeweils als eine Kontaktfläche ausgeführt. Vorliegend sind die Kontaktflächen kreisförmig und bilden die gegenüberliegenden, parallelen Stirnflächen der scheibenförmigen Heizelemente 13.

Bei den Heizelementen 13 handelt es sich jeweils um Widerstandsheizelemente, welche aus einem Material mit positivem Temperatur-Koeffizienten bestehen oder ein solches Material umfassen. Die Heizelemente 13 können jeweils zum Beispiel einen Durchmesser der Stirnflächen bzw. der Kontakte 14, 15 zwischen 5 mm und 25 mm aufweisen. Die Dicke der Heizelemente kann zum Beispiel zwischen 1 mm und 2 mm betragen. Abhängig von der Größe der Kamera 3 bzw. ihres Gehäuses können auch Heizelemente 13 mit anderen Abmessungen eingesetzt werden.

Die Heizelemente 13 sind jeweils zwischen der Leiterplatte 12 und einem Abschnitt 16 des Gehäuseelements 11 angeordnet, wobei die ersten Kontakte 14 jeweils mit der Leiterplatte 12 und die zweiten Kontakte 15 jeweils mit dem Gehäuseelement 11 elektrisch verbunden sind.

Die elektrische Verbindung zwischen der Leiterplatte 12 und dem ersten Kontakt 14 der Heizelemente 13 erfolgen jeweils über ein elektrisch leitfähiges Federelement 17, welches zwischen der Leiterplatte 12 und dem jeweiligen Heizelement 13 angeordnet ist. Das Federelement 17 drückt das Heizelement 13 gegen den Abschnitt 16 des Gehäuseelements 1. Bei den Federelementen 17 kann es sich jeweils um eine Metallfeder bzw. einen Federkontakt handeln. Die Federelemente 17 können zum Beispiel mit einem korrespondierenden Anschluss der Leiterplatte 12 mittels Verlöten oder ähnlichem verbunden sein.

Die Heizelemente 13 können an den Abschnitten 16 jeweils unmittelbar anliegen. Das elektrisch leitfähige Gehäuseelement 11 kann zum Beispiel aus einem leitfähigen Metall wie Aluminium bestehen, sodass eine elektrische Kontaktierung zwischen dem Gehäuseelement 11 und dem Heizelement 13 bereits bei einem unmittelbaren Anliegen des zweiten Kontakts 15 an dem Gehäuseelement 11 erzeugt werden kann. Es ist möglich, dass zur Verbesserung des elektrischen Kontakts zwischen dem Heizelement 13 und dem Abschnitt 16 des Gehäuseelements 11 zumindest an manchen Stellen eine elektrisch leitfähige Paste eingebracht ist.

Das Gehäuseelement 11 kann sich beispielsweise auf einem Massepotenzial befinden, sodass über das Verwenden des ersten Kontakts 11 mit einem anderen Potenzial bzw. über Anlegen einer Spannung an dem ersten Kontakt 14 ein Heizstrom I_{H} in das Heizelement 13 eingeprägt werden kann. Durch die Rückleitung des Stroms über das Gehäuseelement 11 kann auf zusätzliche Verbindungsmittel verzichtet werden und es wird ein kompakter Aufbau der Kamera 3 erreicht. Dazu ist auch die Leiterplatte 12 elektrisch mit dem Gehäuseelement 11 verbunden, beispielsweise über auf der Leiterplatte 12 ausgebildete Kontaktflächen, welche in direktem Kontakt mit der Oberfläche des Gehäuseelements 11 sind. Zusätzlich oder alternativ dazu kann eine elektrische Verbindung zwischen der Leiterplatte 12 und dem Gehäuseelement 11 auch über Verbindungsmittel wie Kabel, Stecker, Lötstellen oder dergleichen erfolgen.

Um eine mechanische Fixierung der Heizelemente 13 in der Kamera 3 zu erreichen, sind die Abschnitte 16 des Gehäuseelements 11 als die Böden von vorliegend topfförmigen Vertiefungen 18 ausgebildet. Vorliegend entspricht die Tiefe der Vertiefungen 18 der Dicke der Heizelemente 13, sodass diese vollständig in den Vertiefungen 18 aufgenommen werden können. Weiterhin entspricht auch der Durchmesser der Vertiefungen 18 den Durchmesser der Heizelemente 13, sodass diese auch lateral in den Vertiefungen 18 befestigt werden können. Dadurch wird eine formschlüssige Befestigung der Heizelemente 13 in zwei Raumrichtungen ermöglicht. Die Befestigung in der dritten Raumrichtungen erfolgt vorliegend über die Federkontakte 17, welche die Heizelemente 13 in die Vertiefungen 18 drücken. Wenn Heizelemente 13 verwendet werden, welche eine andere Form als eine Kreisscheibenform haben, können auch die Vertiefungen 18 eine korrespondierende Form aufweisen, um analog eine formschlüssige Befestigung der Heizelemente 13 zu erreichen.

Auch die Leiterplatte 12 kann formschlüssig an dem Gehäuseelement 11 befestigt werden. Wie in Fig. 3 gezeigt ist, weist das Gehäuseelement 11 dazu eine Aufnahme 19 auf, in die die Leiterplatte 12 eingesetzt ist. Weiterhin umfasst das Gehäuseelement 11 ein oder mehrere Befestigungsabschnitte 20, welche vorliegend zapfenförmig ausgeführt sind und durch Aussparungen 21 in der Leiterplatte 12 ragen. Durch die Befestigungsabschnitte 20 wird somit ebenfalls eine laterale formschlüssige Befestigung der Leiterplatte 12 an dem Gehäuseelement 11 erreicht.

Die Leiterplatte 12 umfasst einen Bildsensor 22, welcher gegenüberliegend zu einer Ausnahme 23 des Gehäuseelements 11 angeordnet ist. In der Ausnahme 23 kann eine Objektiveinrichtung der Kamera 3 angeordnet werden, wodurch die Umgebung der Kamera auf den Bildsensor 22 entlang einer optischen Achse 24 der Kamera 3 abgebildet werden kann. Neben dem Gehäuseelement 11 kann die Kamera 3 auch weitere Gehäuseelemente aufweisen, welche insbesondere ein die Leiterplatte 12 vollständig einhausendes Gehäuse bilden. Zusätzlich kann die Kamera auch weitere Bauteile, wie eine Linse, elektrische Anschlüsse usw. aufweisen, welche vorliegend nicht dargestellt sind.

Durch ein Bestromen der Heizelemente 13 über die Leiterplatte 12 kann die Kamera 3 erwärmt werden. Das Heizen bzw. Erwärmen der Kamera 3 kann zum Beispiel zum Entfernen von witterungsbedingten Belägen wie Eis oder Niederschlag dienen. Eine Ansteuerung der Leiterplatte 12 zum Bestromen der Heizelemente 13 kann beispielsweise ausgehend von der Steuereinrichtung 4 des Fahrerassistenzsystems 2 gesteuert werden.

## Patentansprüche

1. Kamera für ein Fahrzeug (1) umfassend wenigstens ein elektrisch leitfähiges Gehäuseelement (11), wenigstens eine Leiterplatte (12) und wenigstens ein elektrisches Heizelement (13), wobei das elektrische Heizelement (13) einen ersten Kontakt (14) und einen dem ersten Kontakt gegenüberliegend angeordneten zweiten Kontakt (15) zur Zufuhr eines Heizstroms (I_{H}) in das Heizelement (13) aufweist, wobei das Heizelement (13) zwischen der Leiterplatte (12) und einem Abschnitt (16) des Gehäuseelements (11) angeordnet ist und wobei der erste Kontakt (14) mit der Leiterplatte (12) und der zweite Kontakt (15) mit dem Gehäuseelement (11) elektrisch verbunden ist.

2. Kamera nach Anspruch 1,
**dadurch gekennzeichnet,**
**dass** das Heizelement (13) ein Material mit einem positiven Temperatur-Koeffizienten ist oder umfasst.

3. Kamera nach Anspruch 1 oder 2,
**dadurch gekennzeichnet,**
**dass** das Heizelement (13) scheibenförmig ist, wobei der erste Kontakt (14) und der zweite Kontakt (15) jeweils auf einer der gegenüberliegenden Stirnflächen des Heizelements (13) angeordnet sind.

4. Kamera nach einem der vorangehenden Ansprüche,
**dadurch gekennzeichnet,**
**dass** zwischen der Leiterplatte (12) und dem ersten Kontakt (14) des Heizelements (13) ein elektrisch leitfähiges Federelement (17) angeordnet ist, welches das Heizelement (13) gegen den Abschnitt (16) des Gehäuseelements (11) drückt.

5. Kamera nach einem der vorangehenden Ansprüche,
**dadurch gekennzeichnet,**
**dass** das Heizelement (13) unmittelbar an dem Abschnitt (16) des Gehäuseelements (11) anliegt und/oder dass zwischen dem Heizelement (13) und dem Abschnitt des Gehäuseelements (11) zumindest bereichsweise, und insbesondere ausschließlich, eine elektrisch leitfähige Paste aufgebracht ist.

6. Kamera nach einem der vorangehenden Ansprüche,
**dadurch gekennzeichnet,**
**dass** das Heizelement (13) zumindest teilweise in einer Aussparung (18) des Gehäuseelements (11), welche das Heizelement (13) insbesondere in zwei Raumrichtungen fixiert, angeordnet ist.

7. Kamera nach einem der vorangehenden Ansprüche,
**dadurch gekennzeichnet,**
**dass** zumindest ein Kontaktabschnitt der Leiterplatte (21) an dem Gehäuseelement (11) anliegt und elektrisch leitfähig mit dem Gehäuseelement (11) verbunden ist und/oder dass die Leiterplatte (12) formschlüssig an dem Gehäuseelement (11) befestigt ist.

8. Kamera nach einem der vorangehenden Ansprüche,
**dadurch gekennzeichnet,**
**dass** die Leiterplatte (21) wenigstens einen Bildsensor (22) zur Aufnahme von Kamerabildern aufweist.

9. Fahrerassistenzsystem umfassend ein Steuergerät (4) und wenigstens eine Kamera (3) nach einem der vorangehenden Ansprüche, wobei das Steuergerät (4) dazu eingerichtet ist, eine Fahrerassistenzfunktion basierend auf mit der wenigstens einen Kamera (3) erzeugten Bilddaten bereitzustellen.

10. Fahrzeug umfassend wenigstens eine Kamera (3) nach einem der Ansprüche 1 bis 8 oder ein Fahrerassistenzsystem (2) nach Anspruch 9.
